Europäisches Patentamt

European Patent Office

Office européen des brevets

(11) Numéro de publication: **0 281 457**
**A1**

(12) **DEMANDE DE BREVET EUROPEEN**

(21) Numéro de dépôt: 88400338.5

(22) Date de dépôt: 16.02.88

(51) Int. Cl.⁴: **B 60 H 1/00**

(30) Priorité: 20.02.87 FR 8702271

(43) Date de publication de la demande:
07.09.88 Bulletin 88/36

(84) Etats contractants désignés: **DE ES GB IT**

(71) Demandeur: **VALEO**
**64 Avenue de la Grande Armée**
**F-75017 Paris (FR)**

(72) Inventeur: **Danieau, Jacques**
**28, Allée du Hameau Fleuri**
**F-78590 Noisy-Le-Roi (FR)**

(54) **Procédé de montage d'un appareil de chauffage et/ou climatisation dans un véhicule automobile, et unité de montage pour la mise en oeuvre de ce procédé.**

(57) On fixe les éléments de l'appareil, comprenant notamment un ventilateur (13), un radiateur (14), au moins une sortie d'air vers l'habitacle (15) et un séparateur air-eau (12) sur les deux faces d'un tablier (11), puis on monte le tablier sur le corps du véhicule pour séparer l'habitacle (6) du compartiment moteur (4).

FIG.1

EP 0 281 457 A1

## Description

Procédé de montage d'un appareil de chauffage et/ou de climatisation dans un véhicule automobile, et unité de montage pour la mise en oeuvre de ce procédé.

L'invention concerne le montage d'un appareil de chauffage et/ou de climatisation dans un véhicule automobile.

Les appareils de chauffage et/ou de climatisation de l'habitacle des véhicules automobiles sont habituellement montés sur une cloison transversale séparant l'habitacle et le compartiment moteur antérieur du véhicule. Cette cloison, généralement en tôle métallique, fait partie de la structure du véhicule et contribue à sa rigidité et à sa solidité.

L'appareil est fixé sur la cloison sur la chaîne de montage du véhicule. La plupart des éléments de l'appareil viennent à l'intérieur de l'habitacle et sont donc fixés sur la face de la cloison tournée vers l'habitacle. Il s'agit notamment du radiateur destiné à chauffer l'air à partir d'un fluide caloporteur, du groupe moteur-ventilateur destiné à entraîner l'air vers l'habitacle, et d'un boitier contenant les volets de distribution de l'air. D'autres éléments se trouvent à l'extérieur de l'habitacle, sur la face de la cloison tournée vers le compartiment moteur. Il s'agit notamment du séparateur d'entrée d'air, dont le rôle est de séparer l'eau de pluie de l'air prélevé à l'extérieur au-dessous du parebrise et envoyé vers le ventilateur. Ce séparateur est habituellement logé dans un compartiment annexe séparé à la fois de l'habitacle et du compartiment moteur ou constitué d'un compartiment intégré à la carrosserie, et d'où l'eau séparée de l'air est rejetée hors du véhicule.

Ce procédé de montage connu nécessite donc des manipulations à la fois dans l'habitacle et hors de l'habitacle.

Or les constructeurs automobiles souhaitent de plus en plus simplifier les opérations à effectuer sur les chaînes de montage et rendre ces opérations réalisables par des robots.

Le but de l'invention est de réaliser le montage d'un appareil de chauffage ou de climatisation d'une manière qui réponde à cette exigence.

L'invention vise notamment un procédé de montage, sur une cloison transversale séparant l'habitacle et le compartiment moteur antérieur d'un véhicule automobile, d'un appareil de chauffage et/ou de climatisation de l'habitacle, cet appareil étant relié à un circuit de fluide caloporteur dans le compartiment moteur et comportant une prise d'air extérieur en avant de ladite cloison, caractérisé en ce qu'on fixe une partie au moins de l'appareil sur un tablier indépendant et qu'on fixe ensuite le tablier sur le corps du véhicule, en l'amenant par le coté de l'habitacle, pour former ladite cloison.

De préférence, pour réaliser le tablier, on forme une plaque-support et on l'habille de matériaux d'isolation thermique et/ou phonique, notamment d'au moins une couche d'isolant thermique sur sa face correspondant à l'habitacle et au moins une couche d'isolant thermique sur sa face correspondant au compartiment moteur.

Selon une autre caractéristique, on fixe un corps d'appareil contenant un groupe moteur-ventilateur, un échangeur de chaleur et un boîtier contenant les volets de distribution de l'air sur la face du tablier correspondant à l'habitacle.

Au moins une ouverture peut être prévue dans le tablier pour relier au moins un séparateur et/ou un évaporateur au corps d'appareil.

L'invention a encore pour objet une plaque-support pour le montage des éléments de l'appareil, munie de moyens de fixation au corps du véhicule.

L'invention vise également une telle plaque-support garnie de matériaux d'isolation thermique et/ou phonique, ainsi qu'un ensemble comprenant un tablier constitué par cette plaque-support éventuellement garnie de matériau d'isolation et par des éléments d'appareil de chauffage ou de climatisation montés sur le tablier.

Un tel ensemble, ainsi que la plaque-support elle-même, éventuellement garnie de matériaux d'étanchéité, sont désignés ci-après par le terme "unité de montage".

D'autres caractéristiques et avantages de l'invention ressortiront de la description détaillée ci-après et des dessins annexés dans lesquels :

- la figure 1 est une vue très schématique illustrant la phase de pose d'une unité de montage selon l'invention dans un véhicule automobile;

- la figure 2 est une vue analogue à la figure 1, montrant l'unité de montage mise en place dans le véhicule;

- la figure 3 est une vue en perspective d'une plaque-support selon l'invention;

- la figure 4 est une vue analogue à la figure 3, partiellement arrachée, montrant la plaque-support en cours d'équipement;

- la figure 5 est une vue en perspective d'un sous-ensemble propre à être monté sur la plaque-support de la figure 3.

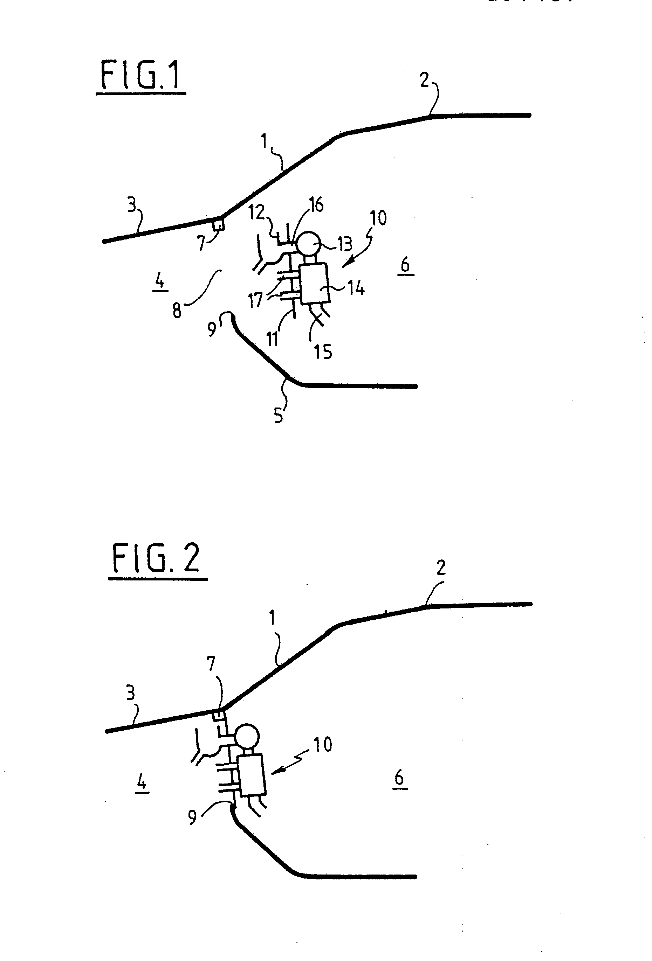

On a représenté de façon schématique à la figure 1 quelques éléments du corps d'un véhicule automobile nécessaires à l'illustration du procédé de montage selon l'invention. Ces éléments sont : le pare-brise 1, prolongé vers le haut et vers l'arrière par le toit 2, le capot 3 recouvrant le compartiment moteur 4 situé à l'avant du véhicule, le plancher 5 limitant vers le bas l'habitacle 6 du véhicule, et une traverse de renfort supérieure 7 placée entre le pare-brise 1 et le capot 3. Un passage libre 8, limité en haut par la traverse 7 et en bas par l'extrémité antérieure 9 du plancher, réunit l'habitacle 6 et le compartiment moteur 4.

On a également représenté, dans l'habitacle 6, une unité de montage 10 prête à être fixée au corps du véhicule. Cette unité de montage comprend un tablier 11, représenté schématiquement par une ligne droite, au moins un séparateur air-eau 12, un ventilateur 13, un radiateur 14 et au moins une sortie d'air 15 vers l'habitacle 6, ladite sortie faisant partie du boîtier contenant les volets de distribution d'air.

Le séparateur 12 est fixé sur la face du tablier 11 tournée vers le compartiment moteur 4. Le ventilateur 13, le radiateur 14 et la sortie 15 sont fixés sur la face du tablier tournée à l'opposé du compartiment moteur. Le tablier est traversé par une conduite 16 destinée à amener l'air du séparateur 12 vers le ventilateur 13, et par des raccords 17 permettant d'amener au radiateur 14 un fluide chaud provenant par exemple du circuit de refroidissement du moteur du véhicule, et de ramener le fluide vers ce circuit après qu'il a traversé le radiateur 14.

Selon l'invention, on fixe l'unité 10 au corps du véhicule de façon que le tablier 11 obture le passage 8. A cet effet, les bords supérieur et inférieur du tablier sont assemblés respectivement à la traverse 7 et à l'extrémité 9 du plancher, les bords latéraux du tablier étant également assemblés à des éléments latéraux non représentés du véhicule. L'appareil de chauffage composé des éléments 12 à 17 est ainsi mis en place sur le véhicule en une seule opération, le ventilateur 13, le radiateur 14 et la sortie d'air 15 se trouvant à l'intérieur de l'habitacle et le séparateur 17 dans le compartiment moteur. Pour rendre l'appareil opératoire, il ne reste qu'à relier les raccords 17 au circuit de refroidissement du moteur et à effectuer les branchements électriques.

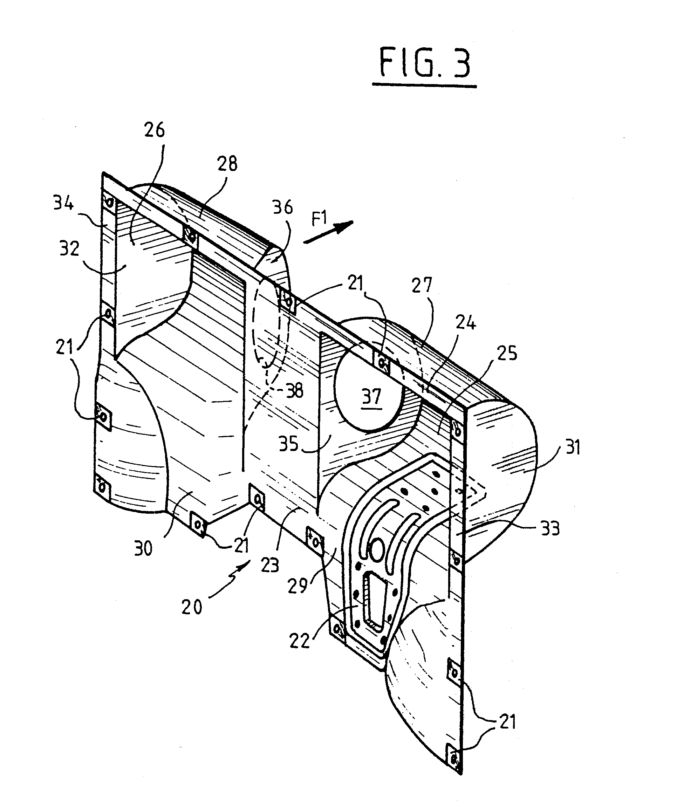

La plaque-support 20 représentée à la figure 3 est constituée par une feuille de matière plastique rigide façonnée par exemple par thermoformage, moulage ou pressage à froid, munie d'inserts métalliques mis en place lors du façonnage. Une série d'inserts 21 est disposée le long du périmètre de la plaque. Les inserts 21 sont propres à coopérer avec des vis en vue de l'assemblage de la plaque au corps du véhicule. Un autre insert 22 s'étend sur une zone de la surface de la plaque et est destiné à supporter des éléments mécaniques du véhicule, comme il sera expliqué plus loin. Mais il peut être prévu d'autres inserts destinés à supporter un quelconque élément mécanique du véhicule tel que par exemple des éléments de l'appareil d'essuyage.

La plaque-support 20 a une forme générale symétrique par rapport à un plan destiné à être confondu, après montage, avec le plan longitudinal de symétrie du véhicule. Seul l'insert 22 est exclu de cette symétrie. La plaque support comprend une portion de paroi médiane sensiblement plane 23 s'étendant de son bord supérieur à son bord inférieur. De part et d'autre de la portion 23 et au voisinage du bord supérieur 24, la plaque s'écarte du plan de celle-ci en direction de la flèche FI, c'est-à-dire du côté correspondant à l'habitacle, définissant ainsi deux volumes 25 et 26 situés du côté de l'habitacle par rapport au plan de la portion 23, mais séparés de celui-ci par la paroi de la plaque-support, et communiquant librement avec le compartiment moteur (il est fait référence ici à l'habitacle et au compartiment moteur du véhicule tels qu'ils se situeront par rapport à la plaque-support après mise en place de l'unité de montage sur le véhicule). Les volumes 25 et 26 sont limités dans le sens de la flèche FI ainsi que vers le haut et vers le bas par des portions de paroi arrondies respectivement 27 et 28 approximativement cylindriques de génératrices horizontales et parallèles au plan de la portion médiane 23. Ces portions de paroi 27 et 28 se raccordent en haut au bord supérieur 24 de la plaque, situé sensiblement dans le plan de la portion 23, et se raccordent vers le bas à des portions de paroi respectivement 29 et 30 qui sont légèrement déviées par rapport au plan de la portion 23 dans la direction opposée à la flèche FI. Les volumes 25 et 26 sont limités vers les côtés du véhicule par des portions de paroi 31 et 32 orientées longitudinalement par rapport au véhicule et qui se raccordent d'une part aux portions de paroi 27 et 28 et d'autre part aux bords latéraux 33 et 34 de la plaque-support 20 qui, dans la région supérieure de celle-ci, sont compris sensiblement dans le plan de la portion 23. Enfin, les volumes 25 et 26 sont limités l'un vers l'autre par des portions de paroi 35 et 36, sensiblement verticales, se raccordant aux portions de paroi arrondies 27 et 28 et à la portion 23. Les portions 35 et 36 sont obliques par rapport au plan de la portion 23, s'écartant l'une de l'autre en s'éloignant de celui-ci. Une ouverture 37 est prévue dans la portion de paroi 35 et une ouverture 38 dans la portion 36.

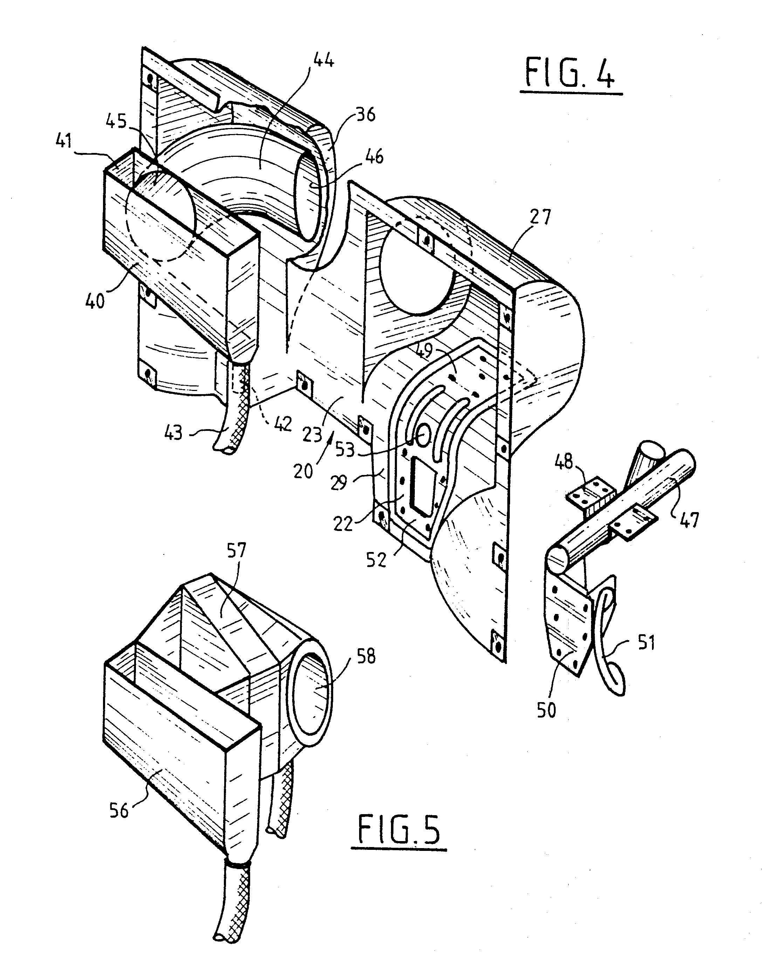

La figure 4 illustre une unité de montage en cours de réalisation. On y retrouve la plaque-support 20 de la figure 3. Cette plaque-support peut être recouverte sur l'une au moins de ses faces d'une ou plusieurs couches de matériau d'isolation phonique et/ou thermique. Ces couches, qui peuvent être mises en place par pressage à chaud, de façon connue en soi, ne sont pas représentées pour faciliter la lecture du dessin.

Un séparateur air/eau 40 est fixé sur la face de la plaque-support 20 tournée vers le compartiment moteur, par des moyens quelconques non représentés, de façon à se trouver du côté du compartiment moteur par rapport au plan de la portion de paroi médiane 23. Le séparateur 40, comme connu en soi, est un bac ouvert par sa face supérieure 41 pour recevoir de l'air provenant de l'extérieur du véhicule, et présentant en son point le plus bas un raccord de sortie 42 sur lequel est montée une tubulure d'évacuation 43 pour l'eau de pluie pénétrant éventuellement dans le séparateur. Une tubulure de passage d'air 44 s'étend depuis une ouverture latérale 45 du bac 40 jusqu'à une extrémité de sortie 46 qui coïncide avec l'ouverture 38 de la portion de paroi 36 de la plaque-support (l'ouverture 38 n'est pas visible à la figure 4, une partie de la plaque-support étant arrachée pour laisser apparaître la tubulure 44). De plus, ce séparateur est isolé thermiquement de manière à n'admettre que de l'air qui ne puisse pas être réchauffé par la chaleur dégagée par le moteur. Bien entendu, il peut être prévu de raccorder l'ouverture 37 soit au même séparateur air/eau 40 par une seconde tubulure de passage d'air, soit à un deuxième séparateur air/eau conformé de la même façon que le premier.

On voit également à la figure 4 deux sous-ensembles mécaniques prêts à être fixés sur la plaque-support 20, et plus précisément sur l'insert 22 faisant partie de celui-ci. L'un de ces sous-ensembles comprend un élément 47 de la colonne de direction du véhicule et un étrier 48 solidaire de l'élément 47 et destiné à être fixé sur une partie 49 de l'insert 22 situé dans la région inférieure de la portion de paroi courbe 27 de la plaque-support. L'autre sous-ensemble comprend un étrier 50 sur lequel sont articulées des pédales, dont l'une apparaît sous la référence 51, destinées à être fixées sur une partie 52 de l'insert 22 appartenant à la portion de paroi 29 de la plaque-support. Les étriers 48 et 50 sont assemblés à l'insert 22, par exemple par boulonnage. L'insert 22 présente, entre ses parties 49 et 52, une ouverture 53 pour le passage de la colonne de direction entre le compartiment moteur et l'habitacle. Il est possible de monter sur la plaque-support, avant sa mise en place dans le véhicule, par l'intermédiaire de l'insert 22, de l'étrier 48 et de l'élément 47, toute la partie de la colonne de direction destinée à venir dans l'habitacle, jusques et y compris au volant, au dispositif antivol et aux commandes solidaires de la colonne de direction.

La figure 5 représente un sous-ensemble monobloc comprenant un séparateur air/eau 56 et un évaporateur de climatisation 57 raccordé en aval du séparateur et pouvant être fixé à la place du sous-ensemble composé du séparateur 40 et de la tubulure 44 de la figure 4 de façon qu'un orifice de sortie 58 de l'évaporateur vienne en coïncidence avec l'ouverture 38 (figure 3) de la plaque-support.

Le corps d'appareil fixé sur la face de la plaque-support 20 dirigée vers l'habitacle comprend, outre le ventilateur et le radiateur, d'autres composants non visibles sur les figures tels que des raccords pour envoyer l'air traité vers différents points de l'habitacle et vers le pare-brise pour le dégivrage ou le désembuage de celui-ci. Il comprend également les organes de commande de l'appareil et les liaisons électriques nécessaires.

Une façade décorative peut être ajoutée à l'unité de montage décrite pour adapter celle-ci au style souhaité pour le véhicule, cette façade dissimulant notamment les couches isolantes.

Bien que n'étant pas indispensable, la symétrie générale de la plaque-support 20 est avantageuse en ce qu'elle permet, par une modification minime de son outillage de fabrication, de réaliser des plaques-supports pour véhicules à conduite à gauche, dans lesquelles l'insert 22 est placé dans la moitié gauche, et des plaques-supports pour véhicules à conduite à droite, dans lesquelles cet insert est placé dans la moitié droite.

Bien que décrite principalement dans son application au montage d'un appareil de chauffage, l'invention s'applique sans autre difficulté au montage d'un appareil de climatisation.

**Revendications**

1. Procédé de montage, sur une cloison transversale séparant l'habitacle (6) et le compartiment moteur antérieur (4) d'un véhicule automobile, d'un appareil de chauffage et/ou de climatisation de l'habitacle, cet appareil étant relié à un circuit de fluide caloporteur dans le compartiment moteur et comportant une prise d'air extérieur en avant de ladite cloison, caractérisé en ce qu'on fixe une partie au moins (13,14) de l'appareil sur un tablier indépendant (11) et qu'on fixe ensuite le tablier sur le corps du véhicule, en l'amenant par le côté de l'habitacle, pour former ladite cloison.

2. Procédé selon la revendication 1, caractérisé en ce que, pour réaliser le tablier, on forme une plaque-support (20) et on l'habille de matériau d'isolation thermique et/ou phonique.

3. Procédé selon la revendication 2, caractérisé en ce qu'on recouvre la plaque-support d'au moins une couche d'isolant thermique sur sa face correspondant à l'habitacle et d'au moins une couche d'isolant thermique sur sa face correspondant au compartiment moteur.

4. Procédé selon l'une des revendications précédentes, caractérisé en ce qu'on fixe au moins un séparateur air/eau (40,56) d'entrée et/ou un évaporateur de climatisation (57) sur la surface du tablier correspondant au compartiment moteur.

5. Procédé selon l'une des revendications précédentes, caractérisé en ce qu'on fixe un corps d'appareil contenant un groupe moteur-ventilateur, un échangeur de chaleur et un boîtier contenant les volets de distribution de l'air sur la face du tablier correspondant à l'habitacle.

6. Procédé selon la revendication 4 et la revendication 6, caractérisé en ce qu'on relie le séparateur (40,56) et/ou l'évaporateur (57) au corps d'appareil à travers au moins une ouverture (38) prévue dans le tablier (20).

7. Unité de montage pour le montage d'un appareil de chauffage ou de climatisation par le procédé selon l'une des revendications précédentes, caractérisée en ce qu'elle comprend une plaque support (20) pour les éléments de l'appareil, munie de moyens de fixation (21) au corps du véhicule.

8. Unité selon la revendication 7, caractérisée en ce que la plaque-support (20) est en matière plastique et comporte au moins un renfort métallique (22) pour la fixation d'organes mécaniques du véhicule.

9. Unité selon l'une des revendications 7 ou 8 pour la mise en oeuvre du procédé selon la revendication 7, caractérisée en ce que le tablier, à la hauteur de l'ouverture, présente une première portion de paroi transversale médiane (23) et au moins une seconde portion de paroi transversale latérale (27,28) décalée par rapport à la première en direction de l'habitacle, ces portions de paroi transversales étant raccordées entre elles par des portions de paroi (35,36) comportant l'ouverture (37,38).

10. Unité selon la revendication 9, caractérisée en ce que le tablier comprend un voile à peu près plan (23) d'où dépend, sur une fraction de la hauteur et une fraction de la largeur du tablier, au moins une creusure (25,26) formant la seconde portion de paroi transversale (27,28) et la portion de paroi (35,36) comportant l'ouverture (37,38).

11. Unité selon la revendication 10, caractérisée en ce que la creusure est adjacente au bord supérieur (24) et à l'un (33) de bords latéraux du tablier.

12. Unité selon l'une des revendications 9 à 11, caractérisée en ce que le tablier présente une forme générale symétrique par rapport à un plan vertical, deux ouvertures (37,38) pouvant se correspondre dans la symétrie.

0281457

FIG.1

FIG.2

0281457

# FIG. 3

0281457

# FIG. 4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 143 503  (FIAT AUTO S.p.A.)<br>* En entier *<br>--- | 1,4-8 | B 60 H    1/00 |
| X | DE-A-3 001 274  (SAAB-SCANIA AB)<br>* Revendications 1,2,3; figures 1,3 * | 1 | |
| A | * Page 14, lignes 1-16 *<br>--- | 4-7 | |
| A | DE-A-3 401 039  (DAIMLER-BENZ)<br>* Revendications 3-6; figures 1,2 *<br>--- | 1,5,7 | |
| A | PATENT ABSTRACTS OF JAPAN, vol. 10, no. 167 (M-488)[2223], 13 juin 1986; & JP-A- 61 18 538 (KASAI-KOGYO K.K.) 27-01-1986<br>----- | 2 | |

**DOMAINES TECHNIQUES RECHERCHES (Int. Cl.4)**

B 60 H
B 60 R

Le présent rapport a été établi pour toutes les revendications

| Lieu de la recherche | Date d'achèvement de la recherche | Examinateur |
|---|---|---|
| LA HAYE | 30-05-1988 | SINGER G.M. |